Europäisches Patentamt

European Patent Office

Office européen des brevets

(19)

(11) Veröffentlichungsnummer: **0 164 048**
**B1**

(12) # EUROPÄISCHE PATENTSCHRIFT

(45) Veröffentlichungstag der Patentschrift:
**12.04.89**

(21) Anmeldenummer: **85106507.8**

(22) Anmeldetag: **28.05.85**

(51) Int. Cl.⁴: **C 08 F 292/00**, C 08 F 279/02,
C 08 L 51/00, C 08 L 25/02,
C 08 L 33/10

(54) **Pfropfpolymerisate mit matter Oberfläche.**

(30) Priorität: **08.06.84 DE 3421353**

(43) Veröffentlichungstag der Anmeldung:
**11.12.85 Patentblatt 85/50**

(45) Bekanntmachung des Hinweises auf die Patenterteilung:
**12.04.89 Patentblatt 89/15**

(84) Benannte Vertragsstaaten:
**BE DE FR GB IT NL**

(56) Entgegenhaltungen:
**GB-A- 1 546 651**
**US-A- 4 169 869**

(73) Patentinhaber: **BAYER AG, Konzernverwaltung RP
Patentabteilung, D-5090 Leverkusen 1 Bayerwerk (DE)**

(72) Erfinder: **Eichenauer, Herbert, Dr., Goethestrasse 71,
D-4047 Dormagen 1 (DE)**
Erfinder: **Zabrocki, Karl, Dr., Edelfalter 33,
D-4044 Büttgen (DE)**
Erfinder: **Döring, Joachim, Dr., Silesiusstrasse 78,
D-5000 Koeln 80 (DE)**
Erfinder: **Ott, Karl-Heinz, Dr., Paul-Klee-Strasse 54,
D-5090 Leverkusen 1 (DE)**
Erfinder: **Bottenbruch, Ludwig, Dr., Wöhlerstrasse 5,
D-4150 Krefeld (DE)**

## Beschreibung

Die Erfindung betrifft Pfropfpolymerisate mit matter Oberfläche, die Monomere mit basischen und sauren Funktionen eingebaut enthalten.

Polymerlegierungen mit elastisch-thermoplastischen Eigenschaften und matter Oberfläche sind von wachsendem Interesse für Anwendungsbereiche, bei denen hohe Zähigkeit und gleichzeitig Blendfreiheit der Formkörper gefordert werden, so z. B. für Teile im Automobilinnenbereich oder für Geräteabdeckungen.

Bisher wurde versucht, solche Polymerlegierungen durch Verwendung relativ grobteiliger Kautschuke (vgl. z. B. US-PS 4 169 869) oder Verwendung unvernetzter oder nur schwach vernetzter Kautschuke (vgl. z. B. DE-OS 2 057 936) als Pfropfgrundlage der Pfropfpolymerisate herzustellen.

Bei allen diesen Versuchen wird aber die erwünschte Oberflächenbeschaffenheit mit einer Verschlechterung ebenfalls gewünschter Produktqualitäten wie z. B. Kerbschlagzähigkeit, Härte oder Verarbeitbarkeit erkauft.

Gegenstand der Erfindung sind matte Pfropfprodukte aus 40 bis 99,8 Gew.-Teilen Styrol, α-Methylstyrol, p-Methylstyrol, Vinyltoluol, Methylmethacrylat oder Mischungen daraus, 20 bis 0,1 Gew.-Teilen einer vinylgruppenhaltigen, bevorzugt heterocyclischen Stickstoffbase, 20 bis 0,1 Gew.-Teilen einer eine polymerisierbare Doppelbindung enthaltenden Mono- oder Disäure und 0 bis 49 Gew.-Teilen Acrylnitril auf einen teilchenförmigen Kautschuk mit einem mittleren Teilchendurchmesser ($d_{50}$) von 0,05 bis 20,0 μm und einer Glastemperatur ≦ 10 °C mit einem Gesamtkautschukgehalt von 5 bis 80 Gew.-%.

Bevorzugt sind Pfropfprodukte aus 60 bis 85 Gew.-Teilen Styrol, α-Methylstyrol, p-Methylstyrol, Vinyltoluol, Methylmethacrylat oder Mischungen daraus, 15 bis 1 Gew.-Teilen einer vinylgruppenhaltigen, bevorzugt heterocyclischen Stickstoffbase, 15 bis 1 Gew.-Teilen einer eine polymerisierbare Doppelbindung enthaltenden Mono- oder Disäure und 10 bis 40 Gew.-Teilen Acrylnitril auf einen teilchenförmigen Kautschuk mit einem mittleren Teilchendurchmesser ($d_{50}$) von 0,1 bis 1,0 μm und einer Glastemperatur ≦ 10 °C mit einem Gesamtkautschukgehalt von 30 bis 70 Gew.-%.

Als Pfropfgrundlage kommen praktisch alle Kautschuke mit Glastemperaturen ≦ 10 °C in Frage. Beispiele sind Polybutadien, Polyisopren, Styrol-Butadien-Copolymerisate, Acrylnitril-Butadien-Copolymerisate, Acrylatkautschuke, EPM-Kautschuke (Ethylen/Propylen-Kautschuke) und EPDM-Kautschuke (Ethylen/Propylen/Dien-Kautschuke, die als Dien ein nichtkonjugiertes Dien wie z. B. Hexadien-1,5 oder Norbornadien in kleinen Mengen enthalten).

Diese Kautschuke müssen in Form von Teilchen eines mittleren Durchmessers ($d_{50}$) von 0,05 bis 20,0 μm, bevorzugt von 0,1 bis 2,0 μm und besonders bevorzugt von 0,1 bis 0,8 μm vorliegen.

Als Pfropfmonomere sind z. B. Styrol, α-Methylstyrol, p-Methylstyrol, Vinyltoluol, Methylmethacrylat oder Mischungen daraus geeignet, gegebenenfalls zusammen mit Acrylnitril, insbesondere Mischungen von Acrylnitril mit Styrol; als polymerisierbare Stickstoffbasen können z. B. 2-Vinylpyridin, 3-Vinylpyridin, 4-Vinylpyridin, N-Vinylimidazol, p-Dimethylaminostyrol, 4-Vinylpyrimidin, N-Vinylcarbazol, N-Vinylpyrrol, N-Vinylindol, Dimethylaminoethylmethacrylat bzw. deren Gemische, als polymerisierbare Mono- oder Disäuren z. B. Arcrylsäure, Methacrylsäure, Maleinsäure, Fumarsäure, Itaconsäure, Crotonsäure, Zimtsäure, Vinylsulfonsäure, Vinylbenzolsulfonsäure bzw. deren Gemische, wobei aliphatische $C_3$–$C_{10}$- oder aromatische $C_9$–$C_{18}$-Mono- oder Dicarbonsäuren bevorzugt sind, eingesetzt werden.

Das Pfropfprodukt kann durch Pfropfpolymerisation der Monomeren in Gegenwart des Kautschuks in Emulsion, Suspension oder Lösung oder durch Kombination dieser Verfahren in an sich bekannter Weise hergestellt werden.

Vorzugsweise erfolgt die Pfropfpolymerisation so, dass während eines Reaktionsabschnittes Styrol, α-Methylstyrol, p-Methylstyrol, Vinyltoluol, Methylmethacrylat oder Mischungen daraus, gegebenenfalls Acrylnitril, und eine eine polymerisierbare Doppelbindung enthaltende Mono- oder Disäure und während eines weiteren Reaktionsabschnittes Styrol, α-Methylstyrol, p-Methylstyrol, Vinyltoluol, Methylmethacrylat oder Mischungen daraus, gegebenenfalls Acrylnitril, und eine vinylgruppenhaltige Stickstoffbase, wobei die Reihenfolge beliebig ist, in Gegenwart der Pfropfgrundlage polymerisiert werden.

Das Pfropfprodukt enthält 5 bis 80 Gew.-% Kautschuk, insbesondere 20 bis 60 Gew.-%, und weist Gelgehalte, gemessen in Aceton bei 25 °C, von 30 bis 90 Gew.-%, insbesondere 40 bis 80 Gew.-% auf.

Bei der Herstellung des Pfropfproduktes durch Emulsionspolymerisation ist es nötig, solche Emulgatoren bzw. Emulgatorkombinationen einzusetzen, die sowohl im sauren als auch im basischen Milieu wirksam sind.

Dem erfindungsgemässen Pfropfprodukt können übliche Additive wie Antioxidantien, Alterungsschutzmittel, Gleitmittel, Flammschutzmittel, Füllstoffe, Pigmente, Antistatika in den üblichen Mengen zugesetzt werden.

Das erfindungsgemässe Pfropfprodukt liegt als matte flexible thermoplastische Formmasse mit guten Fliesseigenschaften bei Verarbeitung durch Extrusion, Kalandrierung und Spritzguss vor. Es kann zu matten Formkörpern verarbeitet werden, ist aber auch als Modifikator für andere Kunststoffe geeignet, insbesondere für Thermoplaste wie Acrylnitril/Butadien/Styrol-Terpolymerisate (ABS), Methylmethacrylat/Butadien/Styrol-Terpolymerisate (MBS), Styrol/Acrylnitril-Copolymerisate (SAN), α-Methylstyrol/Acrylnitril-Copolymerisate, Polystyrol, schlagzähes Polystyrol (HIPS), Polymethylmethacrylat, Polyvinylchlorid, Polycarbonat, Polycarbonat/ABS-Gemische, Polyphenylenoxid, Polyphenylenoxid/ HIPS-Gemische, Polyamide, z. B. Polyamid-6, Polyamid-66, Polyester, z. B. Polyethylenterephthalat, Polybutylenterephthalat. Als «Mattierungsmodifikatoren» dienen bevorzugt solche erfindungsgemässen Pfropfprodukte, die viel Kautschuk – etwa 50 bis 70% – enthalten. Ihre Menge ist im allgemeinen 5 bis 40 Gew.-%, bezogen auf das gesamte modifizierte Produkt.

Eine besonders bevorzugte Mischung dieser Art besteht aus

10-80 Gew.-%, bevorzugt 20-70 Gew.-%, des erfindungsgemässen matten Pfropfproduktes und 90-20 Gew.-%, bevorzugt 80-30 Gew.-% eines thermoplastischen Harzes aus

5-40 Gewichtsteilen Acrylnitril und 95-60 Gew.-Teilen Styrol, α-Methylstyrol, p-Methylstyrol, Methylmethacrylat oder Gemische daraus.

Diese Harze sind bekannt. Sie werden häufig als SAN-Harze bezeichnet.

Man kann sie mit dem Pfropfprodukt vereinigen, indem man sie miteinander bei höheren Temperaturen, insbesondere bei T = 100°C bis 280°C, z.B. in Knetern, auf Walzenstühlen oder Schneckenmaschinen mischt. Fallen Harz und Pfropfprodukt als Emulsionen, Suspensionen oder Lösungen an, so kann man diese mischen und gemeinsam aufarbeiten.

Beispiele und Vergleichsbeispiele

Die folgenden Beispiele erläutern die Erfindung. Die angegebenen Teile sind Gew.-Teile und beziehen sich immer auf Festbestandteile bzw. polymerisierbare Bestandteile.

Herstellung der Pfropfprodukte

In einem Reaktor werden G Teile Kautschukgrundlage (in Form eines Latex mit einem Feststoffgehalt zwischen 35 und 50 Gew.-%) auf 65°C erwärmt, wonach 0,5 Teile Kaliumpersulfat (gelöst in 20 Teilen Wasser) zugegeben werden. Anschliessend werden zunächst M (I) Teile des in Tabelle 1 angegebenen Monomerengemisches im Reaktionsabschnitt I innerhalb 2 Stunden und anschliessend M (II) Teile des in Tabelle 1 angegebenen Monomerengemisches im Reaktionsabschnitt II innerhalb 2 Stunden zudosiert, wobei die Pfropfreaktion erfolgt. Parallel dazu werden 2 Teile des Natriumsalzes eines $C_{9-18}$-Alkylsulfonsäuregemisches (gelöst in 25 Teilen Wasser) innerhalb der 4 Stunden zudosiert. Nach einer Nachreaktionszeit wird der Pfropflatex nach der Zugabe von 1,2 Teilen Antioxidantien in einer wässrigen Magnesiumsulfat/Essigsäurelösung koaguliert. Das resultierende Pulver wird mit Wasser gewaschen und bei 70°C im Vakuum getrocknet.

### Tabelle 1: Zusammensetzung der Pfropfprodukte

| Pfropf-produkt | Kautschuk-grundlage | Mittlere Teilchen-grösse | G [Teile] | Monomere in Reaktions-abschnitt I | M (I) [Teile] | Monomere in Reaktions-abschnitt II | M (II) [Teile] |
|---|---|---|---|---|---|---|---|
| 1 (Vergleich) | Polybutadienlatex | 0,25 μm | 50 | 72 Styrol 28 Acrylnitril | 25 | 72 Styrol 28 Acrylnitril | 25 |
| 2 (Vergleich) | Polybutadienlatex | 0,25 μm | 50 | 67,7 Styrol 26,3 Acrylnitril 6,0 2-Vinylpyridin | 25 | 67,7 Styrol 26,3 Acrylnitril 6,0 2-Vinylpyridin | 25 |
| 3 (Vergleich) | Polybutadienlatex | 0,25 μm | 50 | 67,7 Styrol 26,3 Acrylnitril 6,0 Methacrylsäure | 25 | 67,7 Styrol 26,3 Acrylnitril 6,0 Methacrylsäure | 25 |
| 4 | Polybutadienlatex | 0,25 μm | 50 | 63,4 Styrol 24,6 Acrylnitril 6,0 2-Vinylpyridin 6,0 Methacrylsäure | 25 | 63,4 Styrol 24,6 Acrylnitril 6,0 2-Vinylpyridin 6,0 Methacrylsäure | 25 |
| 5 | Polybutadienlatex | 0,25 μm | 50 | 63,4 Styrol 24,6 Acrylnitril 12,0 2-Vinylpyridin | 25 | 63,4 Styrol 24,6 Acrylnitril 12,0 Methacrylsäure | 25 |
| 6 | Polybutadienlatex | 0,25 μm | 50 | 63,4 Styrol 24,6 Acrylnitril 12,0 Methacrylsäure | 25 | 63,4 Styrol 24,6 Acrylnitril 12,0 2-Vinylpyridin | 25 |
| 7 | Polybutadienlatex | 0,25 μm | 50 | 54,7 Styrol 21,3 Acrylnitril 24,0 Methylsäure | 25 | 54,7 Styrol 21,3 Acrylnitril 24,0 2-Vinylpyridin | 25 |

Herstellung und Ausprüfung der Formmassen

P Teile des Pfropfproduktes werden mit H Teilen eines thermoplastischen Harzes und 3 Teilen eines Gleitmittels in einem Kneter miteinander vermischt und anschliessend zu Normkleinstäben, einer Platte (zur Oberflächenbeurteilung) und einer Spirale (zur Beurteilung der Fliessweglänge) verspritzt. Die Kerbschlagzähigkeit wurde bei Raumtemperatur ($a_k^{RT}$) und bei $-40\,°C$ ($a_k^{-40\,°C}$) nach DIN 53 453 (Einheit: kJ/m²), die Kugeldruckhärte ($H_c$) nach DIN 53 456 (Einheit: N/mm²), die Wärmeformbeständigkeit (Vicat B) nach DIN 53 460 (Einheit: °C) und die Fliessweglänge bei 240°C an einer Spirale von ca. 8 mm Breite und ca. 2 mm Stärke (Einheit: cm) gemessen. Die Glanzmessung erfolgte nach DIN 67 530 an einer ebenen Platte bei einem Reflektionswinkel von 60° (Reflektometerwert) mit Hilfe des Mehrwinkel-Reflektometers «Multi-Gloss» der Firma Byk-Mallinckrodt (siehe Tabelle 2).

Als Thermoplastharze werden eingesetzt:
Styrol/Acrylnitril (SAN) = 72:28-Copolymerisat mit einem $M_w$ von ca. 80 000,
α-Methylstyrol/Acrylnitril (AMSAN) = 69:31-Copolymerisat mit einem $M_w$ von ca. 75 000,
Bisphenol A-Polycarbonat (PC) mit einem $M_w$ von ca. 30 000,

$$\text{alle Harze besitzen ein} \frac{M_w}{M_n} - 1 \leqslant 2{,}0.$$

Tabelle 2: Zusammensetzungen und Prüfdaten der Formmassen

| Form-masse | Pfropf-produkt | p [Teile] | Thermoplastisches Harz | H [Teile] | RT | −40°C | | Vicat B | Fliess-länge | Reflekto-meterwert |
|---|---|---|---|---|---|---|---|---|---|---|
| | | | | | $a_k$ | $a_k$ | $H_c$ | | | |
| 1 (Vergleich) | 1 | 40 | SAN | 60 | 12,1 | 7,1 | 95 | 100 | 50 | 77 |
| 2 (Vergleich) | 2 | 40 | SAN | 60 | 11,8 | 7,0 | 88 | 97 | 48 | 75 |
| 3 (Vergleich) | 3 | 40 | SAN | 60 | 11,2 | 5,6 | 90 | 101 | 40 | 23 |
| 4 | 6 | 40 | SAN | 60 | 11,2 | 5,9 | 89 | 101 | 48 | 33 |
| 5 | 6 | 35 | AMSAN | 65 | 10,3 | 5,1 | 88 | 105 | 32 | 28 |
| 6 | 6 | 35 | PC/SAN = 2:1-Gemisch | 65 | 22,5 | 11 | 83 | 113 | 31 | 36 |

Wie aus Tabelle 2 ersichtlich ist, führt die Abmischung eines Pfropfproduktes, das keine basischen oder sauren Monomerkomponenten einpolymerisiert enthält (Formmasse 1) ebenso wie die Einbringung eines nur mit basischen Monomeren bepfropften Produktes (Formmasse 2) in eine Thermoplastmatrix zu keiner matten Oberfläche. Nach Abmischung eines unter Verwendung säuregruppenhaltiger Monomerer hergestellten Pfropfproduktes mit dem Thermoplastharz kann zwar eine mattierte Oberfläche beobachtet werden, gleichzeitig tritt jedoch eine drastisch reduzierte Fliessfähigkeit auf (Formmasse 3). Erst bei Einsatz der erfindungsgemässen Pfropfprodukte in einer Thermoplastharz-Matrix (Formmassen 4 bis 6) wird eine matte Oberfläche ohne negativen Einfluss auf die sonstigen Eigenschaften erhalten.

**Patentansprüche**

1. Pfropfprodukt aus 40 bis 99,8 Gew.-Teilen Styrol, α-Methylstyrol, p-Methylstyrol, Vinyltoluol, Methylmethacrylat oder Mischungen daraus, 20 bis 0,1 Gew.-Teilen einer vinylgruppenhaltigen, bevorzugt heterocyclischen Stickstoffbase, 20 bis 0,1 Gew.-Teilen einer eine polymerisierbare Doppelbindung enthaltenden Mono- oder Disäure und 0 bis 49 Gew.-Teilen Acrylnitril auf einen teilchenförmigen Kautschuk mit einem mittleren Teilchendurchmesser ($d_{50}$) von 0,05 bis 20,0 μm und einer Glastemperatur $\leq 10\,°C$ mit einem Gesamtkautschukgehalt von 5 bis 80 Gew.-%.

2. Pfropfprodukt aus 60 bis 85 Gew.-Teilen Styrol, α-Methylstyrol, p-Methylstyrol, Vinyltoluol, Methylmethacrylat oder Mischungen daraus, 15 bis 1 Gew.-Teilen einer vinylgruppenhaltigen, bevorzugt heterocyclischen Stickstoffbase, 15 bis 1 Gew.-Teilen einer eine polymerisierbare Doppelbindung enthaltenden Mono- oder Disäure und 10 bis 40 Gew.-Teilen Acrylnitril auf einen teilchenförmigen Kautschuk mit einem mittleren Teilchendurchmesser ($d_{50}$) von 0,1 bis 1,0 μm und einer Glastemperatur $\leq 10\,°C$ mit einem Gesamtkautschukgehalt von 30 bis 70 Gew.-%.

3. Pfropfprodukte gemäss Anspruch 1 und 2, mit 2-Vinylpyridin oder 4-Vinylpyridin bzw. deren Gemisch als Stickstoffbase.

4. Pfropfprodukte gemäss Anspruch 1 und 2, mit Acrylsäure oder Methacrylsäure bzw. deren Gemisch als Säure.

5. Mischungen enthaltend
10–80 Gew.-% des Pfropfproduktes gemäss Anspruch 1 und
90–20 Gew.-% eines thermoplastischen Harzes aus 5–40 Gew.-Teilen Acrylnitril und 95–60 Gew.-Teilen Styrol, α-Methylstyrol, p-Methylstyrol, Methylmethacrylat oder Gemischen davon.

6. Verfahren zur Herstellung der Pfropfprodukte gemäss Anspruch 1 und 2, dadurch gekennzeichnet, dass während eines Reaktionsabschnittes Styrol, α-Methylstyrol, p-Methylstyrol, Vinyltoluol, Methylmethacrylat oder Mischungen daraus, gegebenenfalls Acrylnitril, und eine eine polymerisierbare Doppelbindung enthaltende Mono- oder Disäure und während eines davor oder danach ausgeführten weiteren Reaktionsabschnittes Styrol, α-Methylstyrol, p-Methylstyrol, Vinyltoluol, Methylmethacrylat oder Mischungen daraus, gegebenenfalls Acrylnitril, und eine vinylgruppenhaltige Stickstoffbase in Gegenwart des teilchenförmigen Kautschuks polymerisiert werden.

## Claims

1. A graft product of from 40 to 99.8 parts by weight of styrene, α-methyl styrene, p-methyl styrene, vinyl toluene, methyl methacrylate or mixtures thereof, from 20 to 0.1 part of a vinyl-group-containing, preferably heterocyclic nitrogen base, from 20 to 0.1 part of a mono- or di-acid containing a polymerizable double bond and from 0 to 49 parts by weight acrylonitrile on a particulate rubber having an average particle diameter ($d_{50}$) of from 0.05 to 20.0 µm and a glass temperature of $\leq 10\,°C$, the total rubber content amounting to between 5 and 80% by weight.

2. A graft product of from 60 to 85 parts by weight of styrene, α-methyl styrene, p-methyl styrene, vinyl toluene, methyl methacrylate or mixtures thereof, from 15 to 1 part by weight of a vinyl-group-containing, preferably heterocyclic nitrogen base, from 15 to 1 part by weight of a mono- or di-acid containing a polymerizable double bond and from 10 to 40 parts by weight of acrylonitrile on a particulate rubber having an average particle diameter ($d_{50}$) of from 0.1 to 1.0 µm and a glass temperature of $\leq 10\,°C$, the total rubber content amounting to between 30 and 70% by weight.

3. Graft products as claimed in Claims 1 and 2 containing 2-vinylpyridine or 4-vinylpyridine or a mixture thereof as the nitrogen base.

4. Graft products as claimed in Claims 1 and 2 containing acrylic acid or methacrylic acid or a mixture thereof as the acid.

5. Mixtures containing
from 10 to 80% by weight of the graft product claimed in Claim 1 and
from 90 to 20% by weight of a thermoplastic resin of from 5 to 40 parts by weight of acrylonitrile and from 95 to 60 parts by weight of styrene, α-methyl styrene, p-methyl styrene, methyl methacrylate or mixtures thereof.

6. A process for producing the graft products claimed in Claims 1 and 2, characterized in that, in one reaction phase, styrene, α-methyl styrene, p-methyl styrene, vinyl toluene, methyl methacrylate or mixtures thereof, optionally acrylonitrile, and a mono- or di-acid containing a polymerizable double bond and, in a preceding or following further reaction phase, styrene, α-methyl styrene, p-methyl styrene, vinyl toluene, methyl methacrylate or mixtures thereof, optionally acrylonitrile, and a nitrogen base containing vinyl groups are polymerized in the presence of the particulate rubber.

## Revendications

1. Produit greffé comprenant 40 à 99,8 parties en poids de styrène, d'α-méthylstyrène, de p-méthyl-styrène, de vinyltoluène, de méthacrylate de méthyle ou de leurs mélanges, 20 à 0,1 parties en poids d'une base azotée contenant des groupes vinyle et, de préférence, hétérocyclique, 20 à 0,1 partie en poids d'un mono- ou d'un diacide contenant une double liaison polymérisable et 0 à 49 parties en poids d'acrylonitrile, sur un caoutchouc sous forme de particules d'un diamètre moyen ($d_{50}$) de 0,05 à 20,0 µm et d'une température de vitrification $\leq 10\,°C$ avec une teneur totale en caoutchouc de 5 à 80% en poids.

2. Produit greffé comprenant 60 à 85 parties en poids de styrène, d'α-méthylstyrène, de p-méthylstyrène, de vinyltoluène, de méthacrylate de méthyle ou de leurs mélanges, 15 à 1 parties en poids d'une base azotée contenant des groupes vinyle et, de préférence, hétérocyclique, 15 à 1 parties en poids d'un mono- ou d'un diacide contenant une double liaison polymérisable et 10 à 40 parties en poids d'acrylonitrile, sur un caoutchouc sous forme de particules d'un diamètre moyen ($d_{50}$) de 0,1 à 1,0 µm et d'une température de vitrification $\leq 10\,°C$ avec une teneur totale en caoutchouc de 30 à 70% en poids.

3. Produits greffés selon les revendications 1 et 2, avec de la 2-vinylpyridine ou de la 4-vinylpyridine ou leur mélange, comme base azotée.

4. Produit greffé selon les revendications 1 et 2, avec de l'acide acrylique ou de l'acide méthacrylique ou encore leur mélange comme acide.

5. Mélanges contenant: 10–80% en poids du produit greffé selon la revendication 1 et
90–20% en poids d'une résine thermoplastique constituée de
5–40 parties en poids d'acrylonitrile et de
95–60 parties en poids de styrène, d'α-méthylstyrène, de p-méthylstyrène, de méthacrylate de méthyle ou de leurs mélanges.

6. Procédé de préparation des produits greffés selon les revendications 1 et 2, caractérisé en ce que, au cours d'une partie de la réaction, on polymérise du styrène, de l'α-méthylstyrène, du p-méthyl-styrène, du vinyltoluène, du méthacrylate de méthyle ou leurs mélanges, éventuellement de l'acrylonitrile, ainsi qu'un mono- ou un diacide contenant une double liaison polymérisable, tandis que, pendant une partie réactionnelle supplémentaire effectuée précédemment ou ultérieurement, on polymérise du styrène, de l'α-méthylstyrène, du p-méthylstyrène, du vinyltoluène, du méthacrylate de -méthyle ou leurs mélanges, éventuellement de l'acrylonitrile, ainsi qu'une base azotée contenant des groupes vinyle, en présence du caoutchouc en forme de particules.